# EUROPÄISCHE PATENTSCHRIFT

(11) **EP 0 411 167 B1**
(45) Veröffentlichungstag und Bekanntmachung des Hinweises auf die Patenterteilung: **18.11.1993**
(21) Anmeldenummer: 89114049.3
(22) Anmeldetag: 29.07.1989
(51) Int. Cl.: B23B 5/12, B21D 3/04

(54) **Schäl- und Richtmaschinenanlage zur Bearbeitung stangenförmigen Gutes wie Wellen, Draht und Rohren od. dgl.**
Installation for peeling and straightening for machining bar-shaped products like axles, wire and tubes or the like
Installation d'écroûtage et de dressage pour l'usinage de produits en barres tels que des ronds, des fils et des tubes ou similaires

(43) Veröffentlichungstag der Anmeldung: 06.02.1991
(73) Patentinhaber: Lindemann, Hans, 33619 Bielefeld (DE)
(72) Erfinder: Lindemann, Hans, D-4800 Bielefeld 1 (DE); Lindemann, Wolfgang, Dr.-Ing. Dipl.-Phys., D-4800 Bielefeld 1 (DE)
(74) Vertreter: Lesser, Karl-Bolko, Dipl.-Ing.

(56) Entgegenhaltungen:
- DE-A- 1 752 511
- DE-A- 2 525 289
- DE-A- 3 223 232
- DE-B- 1 167 154

## Beschreibung

Die Erfindung betrifft eine Schäl- und Richtmaschinenanlage zur Bearbeitung stangenförmigen Gutes, wie Wellen, Draht und Rohre od.dgl. gemäß Oberbegriff des Anspruches 1.

Aus der DE-A 1.167.154 ist eine Schälmaschine zur Bearbeitung stangenförmigen Gutes, wie Wellen, Draht und Rohre od.dgl., bekannt, bei der unmittelbar vor und unmittelbar hinter dem umlaufenden Messerkopf der Schälmaschine eine Einzugs- bzw. eine Auszugseinrichtung als Vorschubeinrichtungen angeordnet sind. Diese Vorschubeinrichtungen bewegen das Gut axial und drehend durch den Messerkopf der Schälmaschine. Die Walzen dieser Vorschubeinrichtungen sind gegenüber dem Gut schräg angestellt und sie weisen eine hyperbolisch ausgebildete Lauffläche auf.

Dieser Schälmaschine kann mit einem gewissen Abstand eine Richtmaschine nachgeordnet sein, wodurch sich eine Schäl- und Richtmaschinenanlage ergibt. Je nach Typ der Richtmaschine wird in dieser das Gut drehend oder nicht drehend axial vorwärtsbewegt, wozu entweder die Walzen der Richtmaschine angetrieben werden (z.B. eine Zweiwalzenrichtmaschine) oder der Richtmaschine Einzugs-und / oder Auszugseinrichtungen als Vorschubeinrichtungen zugeordnet sind.

Die bekannten Richtmaschinen weisen alle einen Antrieb auf, sei es um die Walzen zu drehen und dadurch auch das Gut zu bewegen oder sei es um den umlaufenden Rahmen der Richtmaschine zu drehen.

Bei den bisher gebauten Schäl- und Richtmaschinenanlagen ist zwischen dem Messerkopf und der nachgeordneten Richtmaschine immer eine Vorschub- bzw. Transporteinrichtung vorgesehen, um das Gut aus dem Messerkopf auszuziehen und / oder der Richtmaschine zuzuführen.

Der Erfindung liegt die Aufgabe zugrunde, eine gattungsgemäße Schäl- und Richtmaschinenanlage zu schaffen, die im Aufbau und im Antrieb einfacher ausgestaltet ist.

Diese Aufgabe wird durch die Erfindung gemäß Anspruch 1 gelöst. Erfindungsgemäß ist die Richtmaschine unmittelbar hinter der Schälmaschine angeordnet, d.h., zwischen Messerkopf und Richtmaschine befindet sich keine Vorschubeinrichtung. Es hat sich nämlich herausgestellt, daß die Aufgabe der das Gut aus dem Messerkopf herausziehenden Vorschubeinrichtung, nämlich die Vorschubbewegung zu besorgen und das von dem Messerkopf auf das Gut ausgeübte Drehmoment gegebenenfalls aufzunehmen, von der Richtmaschine übernommen werden kann, wenn diese besonders ausgebildet ist.

Die Richtmaschine ist dazu als Richt- und Spannmaschine ausgebildet und die Walzen der Richtmaschine sind gegenüber dem Gut einstellbar schräg angestellt. Außerdem muß eine solche Richtmaschine nicht mehr angetrieben werden.

Die erfindungsgemäß verwendete neue Richtmaschine weist mindestens drei Walzen auf, die in Richtung des Gutes gesehen hintereinander angeordnet sind und von denen die mittlere Walze auf der den beiden anderen Walzen gegenüberliegenden Seite des Gutes angeordnet ist. Werden die Walzen dabei radial so eingestellt, daß sie das Gut fest einspannen, so kann diese Richtmaschine benutzt werden, um das von der Schälmaschine auf das Gut ausgeübte Drehmoment zu aufzunehmen. Es handelt sich dann um eine Richt- und Spannmaschine.

Durch die erfindungsgemäße Ausbildung der Schäl- und Richtmaschinenanlage wird das Gut in der Regel nur von der vor der Schälmaschine angeordneten Vorschubeinrichtung bewegt und gegen das von der Schälmaschine auf das Gut ausgeübte Drehmoment gehalten. Hat das stangenförmige Gut diese Vorschubeinrichtung verlassen, so kann das Drehmoment von den Walzen der Richtmaschine aufgenommen werden.

Der axiale Vorschub des Gutes wird zum einen dadurch erhalten, daß das nächstfolgende stangenförmige Gut das erste Gut vorwärtsschiebt. Weiterhin kann das von der Schälmaschine ausgeübte Drehmoment in der Richtmaschine ausgenutzt werden, um eine Axialbewegung des Gutes zu erzielen.

Dadurch, daß die Walzen gegenüber dem Gut einstellbar schräg angestellt sind, steht der axiale Vorschub des Gutes in einem bestimmten Verhältnis zu einem drehenden Vorschub des Gutes.

An sich reicht es aus, das Gut zwischen mindestens drei Walzen in der Richtmaschine einzuspannen, gemäß einer besonderen Ausführungsform der Erfindung weist die Richtmaschine Walzenpaare auf, deren Walzen, das Gut zwischen sich einschließend, sich jeweils gegenüber liegen. Dadurch kann insbesondere dann eine festere Einspannung des Gutes erreicht werden, wenn von jedem Walzenpaar eine Walze hydraulisch, pneumatisch oder durch Federn auf das Gut anpreßbar ist. Auch kann dann, wenn das Gut nicht gerichtet werden muß, eine feste Einspannung in der Richt- und Spannmaschine erzielt werden.

Darüberhinaus sind alle Walzen insbesondere mechanisch radial und drehbar einstellbar, um die Richtmaschine auf verschiedene Gutdurchmesser einstellen zu können.

Um zu verhindern, daß die Walzen der Richtmaschine auf dem geschälten Gut unerwünschte Laufspuren hinterlassen, ist jedes Walzenpaar in einem eigenen Gehäuse gelagert ist. Diese Gehäuse sind vorzugsweise in einem Grundgestell gelagert sind. Jedes Walzenpaar-Gehäuse ist unabhängig von den anderen Walzenpaar-Gehäusen in dem Grundgestell um die Achse des Gutes schwenkbar. Dadurch können die Walzen so um das Gut herum verteilt werden, daß die Walzen auf verschiedenen, z.B. gleichmäßig über den Umfang des Gutes verteilten Spuren auf dem Gut laufen.

Die Walzen bzw. Walzenpaare können jedoch auch unmittelbar in dem ein einziges Gehäuse bildenden Grundgestell gelagert sein. Dann können die Walzenpaare zwar nicht gegeneinander verschwenkt werden. Aufgrund der schräg gestellten Walzen kann aber auch dann in der Regel erreicht werden, daß die Walzen auf unterschiedlichen Umfangslinien umlaufen.

Die Walzenpaare der Richtmaschine sind im Betrieb der Anlage ortsfest und drehen sich lediglich um ihre Achse. Dabei werden sie nur durch das durchgeschobene Gut in Drehung versetzt. Bei bisher gebauten Richtmaschinen ist - soweit es sich nicht um Richtmaschinen mit umlaufenden Rahmen handelt - in der Regel mindestens eine Walze angetrieben, um das Gut zu bewegen.

Vorteilhaft ist es, wenn das Gut von der Vorschubeinrichtung in einer Drehrichtung gedreht wird, die der Drehrichtung des Messerkopfes entspricht.

Als Vorschubeinrichtung wird bevorzugt ein Vorschubscheibenaggregat eingesetzt. Dieses ist als solches aus der DE-B 3.223.232 bekannt. Dort wird schon beschrieben, dieses als Vorschubeinrichtung für Schäl- und Richtmaschinen zu benutzen. Von diesem Vorschubscheibenaggregat wird das Gut mittels der Vorschubscheiben drehend axial bewegt. Die Vorschubscheiben werden mit einem Teil ihrer Scheibenfläche mit Druck auf das zu bewegende Gut gepreßt. Dadurch, daß die Scheiben mittels eines Antriebes in Drehung versetzt werden, bewegen sie das Gut.

Das Vorschubscheibenaggregat ist unmittelbar vor dem Messerkopf der Schälmaschine angeordnet und wird bevorzugt von dem Maschinenrahmen der Schälmaschine gehalten.

Hat das stangenförmige Gut die Vorschubeinrichtung verlassen, so muß das von der Schälmaschine ausgeübte Drehmoment aufgenommen werden. Durch die Schrägstellung der Walzen der Richtmaschine wird die drehende Bewegung des Gutes zum Teil in eine axiale Bewegung des Gutes umgewandelt. Da das Drehmoment sehr groß ist, führt dies dazu, daß das Gut sehr schnell axial und auch drehend bewegt wird. Dies führt wiederum dazu, daß das Gut praktisch mit dem Messerkopf der Schälmaschine umläuft. Um dies zu verhindern, sind die Walzen der Richtmaschine bremsbar ausgebildet. Über das Abbremsen der Walzen, die ihrerseits das Gut einspannen, wird somit das von der Schälmaschine auf das Gut ausgeübte Drehmoment aufgenommen.

Vorteilhafterweise weisen die Walzen der Richtmaschine jeweils mindestens eine vorzugsweise ölhydraulisch betätigbare Scheibenbremse auf. Es kann auch auf jeder Seite der Walze eine Scheibenbremse vorgesehen sein. Je nach zu bearbeitendem Gut und der gewünschten Schältiefe reicht es aber auch aus, daß nur eine oder einige Walzen abbremsende Scheibenbremsen aufweisen.

Weitere Einzelheiten der Erfindung ergeben sich aus einem im Folgenden anhand der Zeichnung beschriebenen Ausführungsbeispiel.

Es zeigt:
- Figur 1: eine schematische Darstellung einer Schäl- und Richtmaschinenanlage;
- Figur 2: einen Schnitt durch die Richtmaschine, und
- Figuren 3a, 3b und 3c: schematische Darstellungen der Einstellung der Richtwalzen gegenüber dem zu bearbeitenden Gut.

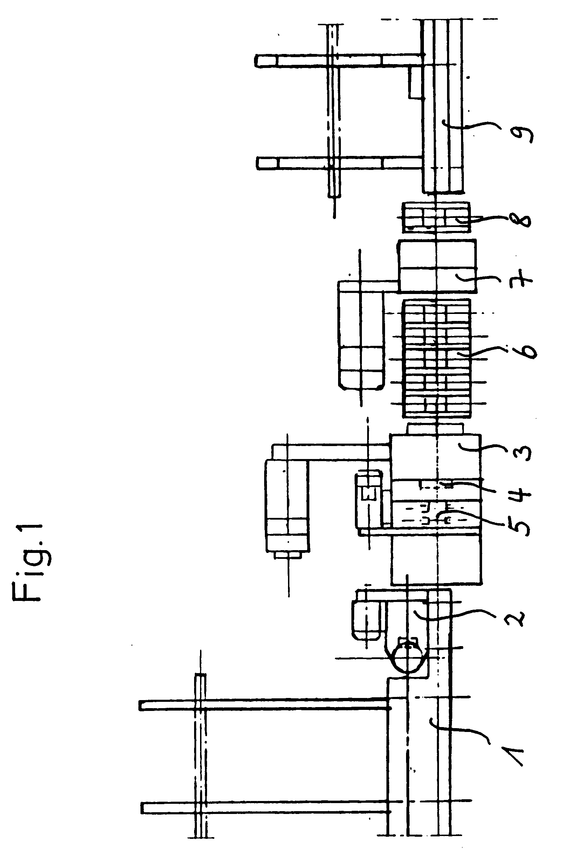

Die Figur 1 zeigt dem Durchlauf des Gutes entsprechend von links nach rechts einen Zuführrost 1, von dem das Gut einer Fasmaschine 2 zugeführt wird, in der das eine Ende des Gutes angefast werden kann, weiterhin eine Schälmaschine 3 mit einer unmittelbar vor deren Messerkopf 4 angeordneten Vorschubeinrichtung, hier einem Vorschubscheibenaggregat 5, einer Richt- und Spanneinrichtung 6, einer Poliermaschine 7, einer Auszugseinheit 8 und einem Abführrost 9.

Wesentlich ist hier nur die Schälmaschine 3 mit dem Vorschubscheibenaggregat 5 und die unmittelbar dahinter angeordnete Richt- und Spannmaschine 6.

Fasmaschinen 2 sind bekannt und werden insbesondere dann eingesetzt, wenn die Stangenenden größere Deformationen aufweisen. Poliermaschinen 7 mit ihren Auszugseinheiten 8 werden dann eingesetzt, wenn das geschälte Gut noch poliert werden soll.

Bezüglich des der Schälmaschine 3 zugeordneten Vorschubscheibenaggregates 5 wird auf die DE-B 3.223.232 verwiesen, in der dieses erstmals beschrieben ist.

Schälmaschinen zum Schälen stangenförmigen Gutes, wie Wellen, Draht und Rohre od.dgl., mit einem umlaufenden Messerkopf, sind allgemein bekannt, weshalb hier auf deren Aufbau auch nicht näher eingegangen wird.

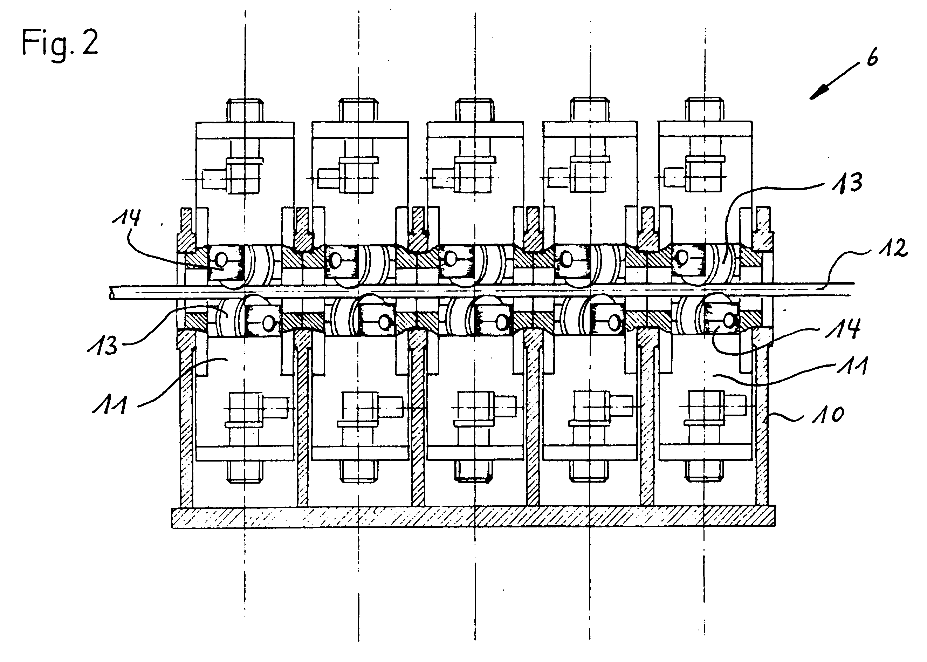

Die in der Figur 2 dargestellte Richt- und Spannmaschine 6 weist ein Grundgestell 10 auf, in dem hier fünf Gehäuse 11 gelagert sind, die um die Längsachse des Gutes 12 schwenkbar ausgebildet sind. Es können aber auch nur drei Gehäuse 11 vorgesehen sein. Darüberhinaus ist es auch möglich, nur ein einziges durch das Grundgestell 10 gebildetes Gehäuse vorzusehen. Dabei können die Walzenpaare 13 jedoch nicht mehr um das Gut 12 geschwenkt werden.

In diesen Gehäusen 11 sind jeweils zwei Walzen 13 in mit Wälzlagern versehenen Haltern 14 gelagert, die sich bezüglich des Gutes 12 gegenüberliegen, d.h. die Walzen 13 schließen das Gut 12 zwischen sich ein. Diese Walzen 12 weisen eine hyperbolisch ausgebildete Lauffläche auf und sind gegenüber der Längsachse des Gutes 12 schräg angestellt, so daß die Kontaktfläche zwischen der einzelnen Walze 13 und dem Gut 12 relativ groß ist.

Die einzelnen Halter 14 können mit der jeweiligen Walze 13 radial auf das Gut 12 zu bzw. von diesem weg bewegt werden, um die Richt- und Spannmaschine 6 auf verschiedene Gutdurchmesser einstellen zu können. Dabei wird jeweils eine Walze exakt auf den Gutdurchmesser eingestellt, während die gegenüberliegende Walze 1 bis 2 mm größer eingestellt wird. Diese zweite Walze 13 ist darüberhinaus noch hydraulisch, pneumatisch oder mittels Federn radial einstellbar bzw. auf das zu bearbeitende Gut 12 preßbar, sodaß das Gut 12 zwischen den Walzen eines Paares so fest gehalten wird, daß die Walzen das von der Schälmaschine 3 auf das Gut 12 ausgeübte Drehmoment aufnehmen können.

Darüberhinaus können die Anstellwinkel der Walzen 13 gegenüber dem Gut 12 verstellt werden, um eine möglichst große Anpreßlinie bzw. -fläche zwischen Gut 12 und Walze 13 zu erhalten.

Die einzelnen Walzen 13 weisen nun nicht gesondert dargestellte Bremsen auf. Diese Bremsen können Scheibenbremsen sein, die z.B. hydraulisch betätigt werden können.

Die einzelnen jeweils zwei Walzen 13 aufweisenden Gehäuse 11 sind in dem Grundgestell 10 unabhängig voneinander um die Achse des Gutes 12 verschwenkbar, sodaß die Gehäuse 11 so verschwenkt werden können, daß alle Walzen 13 der Richt- und Spannmaschine auf dem Gut 12 in verschiedenen, am Umfang gleichmäßig verteilten Spuren laufen.

Die mechanische radiale Einstellung der Walzen 13 auf den Gutdurchmesser, die Verstellung des Anstellwinkels der Walzen 13 und die Verschwenkung der Gehäuse 11 im Grundgestell 10 wird jeweils über Getriebemotoren in der Regel nur bei Stillstand der Schäl- und Richtmaschinenanlage vorgenommen. Während des Betriebes der Anlage wirken in der Richt- und Spannmaschine 6 außer den Richtkräften nur die hydraulische Anpressung der jeweils zweiten Walze 13 und die hydraulisch arbeitenden Bremsen, während die Walzen 13 durch das durchgeschobene Gut 12 bewegt bzw. durch die Bremsen gebremst werden.

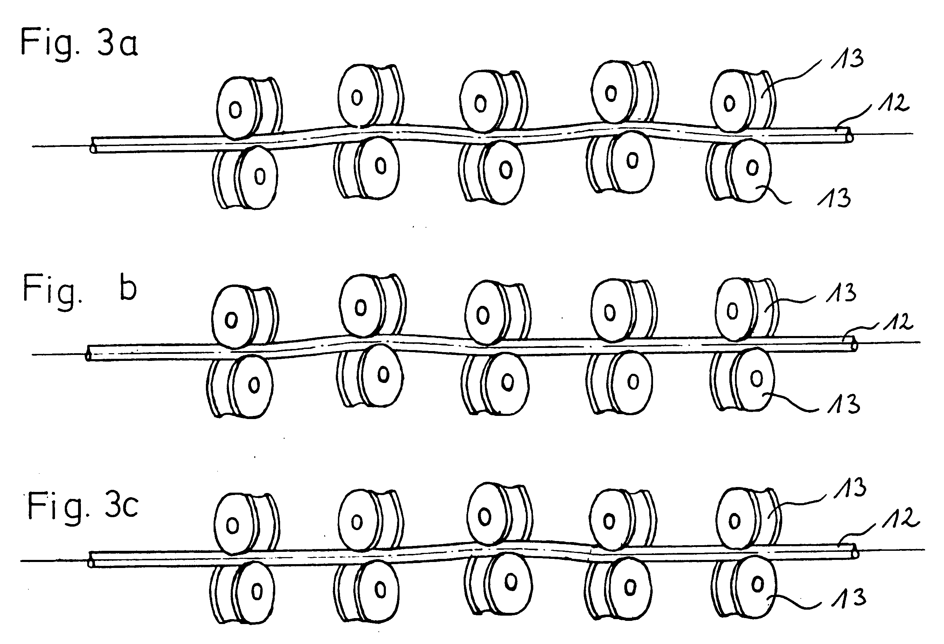

Die Figuren 3a, 3b und 3c zeigen schematisch noch verschieden ausgelenkte Walzenpaare für von der Geradheit des Gutes 12 abhängige unterschiedliche Richtprobleme. Wie sich den Figuren entnehmen läßt, können dann, wenn fünf Walzenpaare vorgesehen sind, unterschiedliche Biegelinien eingestellt werden. Dazu wird jeweils das eine oder andere Walzenpaar um das Maß der erforderlichen Durchbiegung aus der Achse des Gutes 12 ausgelenkt, was an und für sich von Richtmaschinen bekannt ist. So können ein oder zwei Richtdreiecke eingestellt werden.

Beim Betrieb der Anlage wird in der Regel das Gut 12 von der Vorschubeinrichtung 5, hier dem Vorschubscheibenaggregat 5, axial vorgeschoben und in der Umlaufrichtung des Messerkopfes langsam gedreht. Vom Vorschubscheibenaggregat 5 wird dabei auch das von der Schälmaschine 3 auf das Gut 12 ausgeübte Drehmoment aufgenommen. Das axial drehende Gut 12 versetzt in der Richt- und Spannmaschine 6 die Walzen 13 ins Rollen. Hat das Ende des stangenförmigen Gutes 12 das Vorschubscheibenaggregat 5 verlassen, so schiebt das nächstfolgende Gut 12 das erstere axial weiter. Kurz vor dem Verlassen des Vorschubscheibenaggregates 5 wird die hydraulische Bremsung der Walzen 13 eingeschaltet. Dadurch kann jetzt die Richt- und Spannmaschine 6 das Drehmoment aufnehmen. Durch das hydraulische Einspannen des Gut 12 zwischen den hydraulisch gebremsten Walzen 13 wird das Drehmoment von der Richt- und Spannmaschine aufgenommen. Die Abbremsung muß dabei so groß sein, daß das Ende des stangenförmigen Gutes 12 von dem nachfolgenden Gut 12 mit der eingestellten Vorschubgeschwindigkeit vom Vorschubscheibenaggregat 5 geschoben werden kann. Ohne die Bremsung der Walzen 13 wäre ein Schälen des Gutes 12 sonst nicht mehr möglich. Die Schälmesser würden das Gut 12, ohne es zu schälen, auf Messerkopfumdrehung bringen und das Gut 12 würde von den schrägangestellten Walzen 13 der Richt- und Spannmaschine 6 unkontrolliert aus der Schälmaschine 3 herausgezogen. Dabei würden die Schälmesser lediglich Rillen auf dem Umfang des Gutes 12 hinterlassen.

### Bezugszeichenliste

- 1: Zuführrost
- 2: Fasmaschine
- 3: Schälmaschine
- 4: Messerkopf
- 5: Vorschubeinrichtung, Vorschubscheibenaggregat
- 6: Richt- und Spannmaschine
- 7: Poliermaschine
- 8: Auszugseinheit
- 9: Abführrost
- 10: Grundgestell
- 11: Gehäuse
- 12: Gut
- 13: Walze
- 14: Halter

## Patentansprüche

1. Schäl- und Richtmaschinenanlage zur Bearbeitung stangenförmigen Gutes, wie Wellen, Draht und Rohre od.dgl., mit einer Schälmaschine (3) mit einem umlaufenden Messerkopf, einer in Durchlaufrichtung des Gutes (12) gesehen unmittelbar vor der Schälmaschine (3) angeordneten, das Gut (12) drehend vorschiebenden Vorschubeinrichtung (5) und einer hinter der Schälmaschine (3) angeordneten Richtmaschine, dadurch gekennzeichnet, daß die Richtmaschine (6) unmittelbar hinter der Schälmaschine (3) angeordnet ist, daß die Richtmaschine (6) mindestens drei Walzen (13) aufweist, die in Richtung des Gutes (12) gesehen hintereinander angeordnet sind und von denen die mittlere Walze (13) auf der den beiden anderen Walzen (13) gegenüberliegenden Seite des Gutes (12) angeordnet ist und daß die Walzen (13) der Richtmaschine (6) gegenüber dem Gut (12) einstellbar schräg angestellt sind.

2. Schäl- und Richtmaschinenanlage nach Anspruch 1, dadurch gekennzeichnet, daß die Richtmaschine (6) Walzenpaare (13) aufweist, deren Walzen (13), das Gut (12) zwischen sich einschließend, sich jeweils gegenüber liegen.

3. Schäl- und Richtmaschinenanlage nach einem der vorhergehenden Ansprüche, dadurch gekennzeichnet, daß von jedem Walzenpaar eine Walze (13) hydraulisch, pneumatisch oder mittels Federn auf das Gut (12) anpreßbar ist.

4. Schäl- und Richtmaschinenanlage nach einem der vorhergehenden Ansprüche, dadurch gekennzeichnet, daß alle Walzen (13) insbesondere mechanisch radial und im Winkel einstellbar sind.

5. Schäl- und Richtmaschinenanlage nach einem der vorhergehenden Ansprüche, dadurch gekennzeichnet, daß jedes Walzenpaar (13) in einem eigenen Gehäuse (11) gelagert ist, welche vorzugsweise in einem Grundgestell (10) gelagert sind.

6. Schäl- und Richtmaschinenanlage nach dem vorhergehenden Anspruch, dadurch gekennzeichnet, daß jedes Walzenpaar-Gehäuse (11) unabhängig von den anderen Walzenpaar-Gehäusen (11) in dem Grundgestell (10) um die Achse des Gutes (12) schwenkbar ist.

7. Schäl- und Richtmaschinenanlage nach einem der vorhergehenden Ansprüche, dadurch gekennzeichnet, daß die Walzenpaare (13) im Betrieb der Anlage ortsfest sind.

8. Schäl- und Richtmaschinenanlage nach einem der vorhergehenden Ansprüche, dadurch gekennzeichnet, daß die Walzen (13) der Richtmaschine (6) nur durch das durchgeschobene Gut (12) in Drehung versetzt werden.

9. Schäl- und Richtmaschinenanlage nach einem der vorhergehenden Ansprüche, dadurch gekennzeichnet, daß das Gut (12) von der Vorschubeinrichtung (5) in einer Drehrichtung gedreht wird, die der Drehrichtung des Messerkopfes (4) entspricht.

10. Schäl- und Richtmaschinenanlage nach einem der vorhergehenden Ansprüche, dadurch gekennzeichnet, daß die Vorschubeinrichtung ein Vorschubscheibenaggregat (5) ist.

11. Schäl- und Richtmaschinenanlage nach dem vorhergehenden Anspruch, dadurch gekennzeichnet, daß das Vorschubscheibenaggregat (5) unmittelbar vor dem Messerkopf (4) der Schälmaschine (3) angeordnet ist.

12. Schäl- und Richtmaschinenanlage nach einem der vorhergehenden Ansprüche, dadurch gekennzeichnet, daß die Walzen (13) der Richtmaschine (6) bremsbar ausgebildet sind.

13. Schäl- und Richtmaschinenanlage nach dem vorhergehenden Anspruch, dadurch gekennzeichnet, daß die Walzen (13) der Richtmaschine (6) eine vorzugsweise ölhydraulisch betätigbare Scheibenbremse aufweisen.

## Claims

1. De-scaling and straightening machine installation for handling rod-shaped material such as shafts, wire and tubes or the like, with a de-scaling machine (3) having a rotating cutting head, a feed device (5) for rotating and advancing the material (12) and arranged directly ahead of the de-scaling machine (3) looked at in the direction of passage of the material (12) and a straightening machine arranged following the de-scaling machine (3) characterised in that the straightening machine (6) is arranged directly following the de-scaling machine (3), that the straightening machine (6) has at least three rolls (13) which are arranged one behind the other looked at in the direction of the material (12) and of which the middle roll (13) is arranged on the opposite side of the material (12) from the other two rolls (13) and that the rolls (13) of the straightening machine (6) are arranged adjustably inclined in relation to the material (12).

2. De-scaling and straightening machine installation according to claim 1, characterised in that the straightening machine (6) has pairs of rolls (13), of which the rolls (13) lie respectively opposite one another trapping the material (12) between them.

3. De-scaling and straightening machine installation according to one of the foregoing claims, characterised in that one roll (13) of each pair is capable of being urged against the material (12) hydraulically, pneumatically or by means of springs.

4. De-scaling and straightening machine installation according to one of the foregoing claims, characterised in that all the rolls (13) are adjustable in particular mechanically, radially and in angle.

5. De-scaling and straightening machine installation according to one of the foregoing claims, characterised in that each pair of rolls (13) is mounted in its own housing (11), the housings preferably being mounted in a base frame (10).

6. De-scaling and straightening machine installation according to the preceding claim, characterised in that each housing (11) containing a pair of rolls is capable of pivoting in the base frame (10) about the axis of the material (12) independently of the other housings (11).

7. De-scaling and straightening machine installation according to one of the foregoing claims, characterised in that the pairs of rolls (13) are secured during running of the installation.

8. De-scaling and straightening machine installation according to one of the foregoing claims. characterised in that the rolls (13) of the straightening machine (6) are only set in rotation by the material (12) passing through.

9. De-scaling and straightening machine installation according to one of the foregoing claims, characterised in that the material (12) is rotated by the feed device (5) in a direction of rotation corresponding to the direction of rotation of the cutting head (4).

10. De-scaling and straightening machine installation according to one of the foregoing claims, characterised in that the feed device is a feed disc assembly (5).

11. De-scaling and straightening machine installation according to the preceding claim, characterised in that the feed disc assembly (5) is arranged directly ahead of the cutting head (4) of the de-scaling machine (3).

12. De-scaling and straightening machine installation according to one of the foregoing claims, characterised in that the rolls (13) of the straightening machine are provided with braking means.

13. De-scaling and straightening machine installation according to the preceding claim, characterised in that the rolls (13) of the straightening machine (6) have a disc brake which is preferably hydraulically actuated.

## Revendications

1. Installation d'écroûtage et de dressage pour l'usinage de produits en barres, tels que des ronds, des fils et des tubes ou similaires, avec une machine d'écroûtage (3) avec une tête de fraisage rotative, un dispositif d'avance (5) avançant le produit (12) de manière rotative, disposé, vu dans la direction de passage du produit, immédiatement avant la machine d'écroûtage (3) et une machine de dressage disposée derrière la machine d'écroûtage (3), caractérisée en ce que la machine de dressage (6) est disposée immédiatement derrière la machine d'écroûtage (3), que la machine de dressage (6) présente au moins trois cylindres (13) qui, vus dans la direction du produit (12), sont disposés l'un derrière l'autre et dont le cylindre central (13) est disposé du côté du produit (12) opposé aux deux autres cylindres (13) et que les cylindres (13) de la machine de dressage (6) sont placés en oblique, de manière réglable, par rapport au produit (12).

2. Installation d'écroûtage et de dressage suivant la revendication 1, caractérisée en ce que la machine de dressage (6) présente des paires de cylindres (13) dont les cylindres (13), contenant le produit (12) entre eux, se trouvent chaque fois l'un en face de l'autre.

3. Installation d'écroûtage et de dressage suivant l'une des revendications précédentes, caractérisée en ce qu'un cylindre (13) de chaque paire de cylindres peut être poussé sur le produit (12) hydrauliquement, pneumatiquement ou par des ressorts.

4. Installation d'écroûtage et de dressage suivant l'une des revendications précédentes, caractérisée en ce que tous les cylindres (13) sont, en particulier, mécaniquement réglables axialement et quant à l'angle.

5. Installation d'écroûtage et de dressage suivant l'une des revendications précédentes, caractérisée en ce que chaque paire de cylindres (13) est montée dans un boîtier propre (11) qui est, de préférence, monté dans un bâti de base (10).

6. Installation d'écroûtage et de dressage suivant la revendication précédente, caractérisée en ce que chaque boîtier de paire de cylindres (11) est pivotable sur l'axe du produit (12), indépendamment des autres boîtiers de paire de cylindres (11) dans le bâti de base (10).

7. Installation d'écroûtage et de dressage suivant l'une des revendications précédentes, caractérisée en ce que les paires de cylindres (13) sont stationnaires pendant le fonctionnement de l'installation.

8. Installation d'écroûtage et de dressage suivant l'une des revendications précédentes, caractérisée en ce que les cylindres (13) de la machine de dressage (6) ne sont déplacés en rotation que par le produit (12) avancé.

9. Installation d'écroûtage et de dressage suivant l'une des revendications précédentes, caractérisée en ce que le produit (12) est tourné par le dispositif d'avance (5) dans un sens de rotation qui correspond au sens de rotation de la tête de fraisage (4).

10. Installation d'écroûtage et de dressage suivant l'une des revendications précédentes, caractérisée en ce que le dispositif d'avance est un ensemble de disques d'avance (5).

11. Installation d'écroûtage et de dressage suivant la revendication précédente, caractérisée en ce que l'ensemble de disques d'avance (5) est disposé immédiatement avant la tête de fraisage (4) de la machine d'écroûtage (3).

12. Installation d'écroûtage et de dressage suivant l'une des revendications précédentes, caractérisée en ce que les cylindres (13) de la machine de dressage (6) se présentent freinables.

13. Installation d'écroûtage et de dressage suivant la revendication précédente, caractérisée en ce que les cylindres (13) de la machine de dresage (6) présentent un frein à disques actionnable, de préférence, par de l'huile hydraulique.
